# EUROPEAN PATENT APPLICATION

(11) **EP 3 309 216 A1**
(43) Date of publication of application: **18.04.2018**
(21) Application number: 16772445.9
(22) Date of filing: 22.03.2016
(51) Int. Cl.: C08L 33/12, C08K 5/20, C08L 23/08

(54) **THERMOPLASTIC RESIN COMPOSITION, MOLDED ARTICLE, METHOD OF MANUFACTURING MOLDED ARTICLE, AND EXTERIOR MATERIAL FOR VEHICLE**

(30) Priority: 02.04.2015 JP 2015075526
(71) Applicant: Mitsubishi Chemical Corporation, Tokyo 100-8251 (JP)
(72) Inventor: MURAYAMA, Yoshiaki, Tokyo 100-8251 (JP); UEDA, Haruo, Tokyo 100-8251 (JP)
(74) Representative: Ter Meer Steinmeister & Partner
(86) International application number: PCT/JP2016/058964
(87) International publication number: WO 2016/158564

(57) **Abstract**

There is provided a thermoplastic resin composition that has an excellent appearance, scratch resistance, weather resistance, and heat resistance in a molded article. The thermoplastic resin composition includes an acrylic resin (A) and an anti-scratching agent (B). The acrylic resin (A) includes a resin (A1) including 80 mass% or more of a repeating unit derived from methyl methacrylate. The anti-scratching agent (B) includes a component (B2) being a copolymer of ethylene and at least one vinyl monomer which is a copolymer other than an ethylene/α-olefin copolymer rubber and an ethylene/α-olefin/non-conjugated diene copolymer rubber and a component (B3) being a higher fatty acid amide, and further includes a component (B1) that is ethylene/α-olefin copolymer rubber or an ethylene/α-olefin/non-conjugated diene copolymer rubber, and a component (B4) that is a graft copolymer.

## Description

### [Technical Field]

The present invention relates to a thermoplastic resin composition, a molded article, and an exterior material for a vehicle.

Priority is claimed on Japanese Patent Application No. 2015-075526, filed April 2, 2015, the content of which is incorporated herein by reference.

### [Background Art]

Acrylic resins are widely used as materials for household equipment such as bathroom washbasins, bathtubs, and flush toilets; building materials; and interior and exterior materials for vehicles since thereby an excellent appearance, scratch resistance, and chemical resistance are obtained.

When acrylic resins are used as materials for household equipment, building materials, or interior and exterior materials for vehicles, since the products may be scratched due to contact with a human or a product, better scratch resistance is required.

As a method of solving such problems, for example, Patent Literature 1, proposes an acrylic resin molded article of which a surface is coated. In addition, Patent Literature 2 proposes an acrylic resin molded article into which a silicone oil is mixed.

### [Citation List]

### [Patent Literature]

[Patent Literature 1]
   PCT International Publication No. WO 2010/067742 pamphlet
[Patent Literature 2]
   Japanese Unexamined Patent Application, First Publication No. H 11-35778

### [Summary of Invention]

### [Technical Problem]

However, since an organic solvent is used for the acrylic resin molded article proposed in Patent Literature 1, the environmental impact is great and the productivity is poor because a coating process is included. In addition, the acrylic resin molded article proposed in Patent Literature 2 is inferior in color rendering properties and weather resistance of the molded article due to the mixed in silicone oil, and molding defects are likely to occur during molding.

Here, an object of the present invention is to provide a thermoplastic resin composition that has an excellent appearance, scratch resistance, weather resistance, and heat resistance in a molded article.

### [Solution to Problem]

The present invention includes the following aspects.
[1] A thermoplastic resin composition including an acrylic resin (A) and an anti-scratching agent (B),
   wherein the acrylic resin (A) includes a resin (A1) including 80 mass% or more of a repeating unit derived from methyl methacrylate, and
   wherein the anti-scratching agent (B) includes the following component (B2) and component (B3):
   the component (B2) being a copolymer of ethylene and at least one vinyl monomer which is a copolymer other than an ethylene/α-olefin copolymer rubber and an ethylene/α-olefin/non-conjugated diene copolymer rubber, and
   the component (B3) being a higher fatty acid amide.
[2] The thermoplastic resin composition according to [1],
   wherein the anti-scratching agent (B) further includes the following component (B1):
   the component (B1) that is ethylene/α-olefin copolymer rubber or an ethylene/α-olefin/non-conjugated diene copolymer rubber.
[3] The thermoplastic resin composition according to [1],
   wherein the anti-scratching agent (B) further includes the following component (B4):
   the component (B4) that is a graft copolymer.
[4] The thermoplastic resin composition according to any one of [1] to [3],
   wherein a content of the anti-scratching agent (B) is 2 parts by mass or more and 20 parts by mass or less with respect to 100 parts by mass of the acrylic resin (A).
[5] The thermoplastic resin composition according to any one of [1] to [4],
   wherein the resin (A1) including 80 mass% or more of a repeating unit derived from methyl methacrylate includes a repeating unit derived from methyl methacrylate and a repeating unit derived from methyl acrylate.
[6] The thermoplastic resin composition according to any one of [1] to [5],
   wherein a mass average molecular weight of the resin (A1) including 80 mass% or more of a repeating unit derived from methyl methacrylate is 20,000 or more and 200,000 or less.
[7] The thermoplastic resin composition according to any one of [1] to [6],
   wherein the acrylic resin (A) further includes an impact resistance modifier (a) including 20 mass% or more of a repeating unit derived from an alkyl acrylate having 2 to 8 carbon atoms.
[8]A molded article including the thermoplastic resin composition according to any one of [1] to [7].
[9] The molded article according to [8],
   wherein ΔE*ab between before and after a scratch resistance test is 3 or less.
[10] An exterior material for a vehicle including the thermoplastic resin composition according to any one of [1] to [9].
[11] An exterior material for a vehicle including the molded article according to [8] or [9].
[12] A molded article including an acrylic resin (A) and an anti-scratching agent (B),
   wherein ΔE*ab between before and after a weather resistance test is less than 3,
   wherein the acrylic resin (A) includes a resin (A1) including 80 mass% or more of a repeating unit derived from methyl methacrylate, and
   wherein the anti-scratching agent (B) includes the following component (B2) and component (B3):
   the component (B2) being a copolymer of ethylene and at least one vinyl monomer which is a copolymer other than an ethylene/α-olefin copolymer rubber and an ethylene/α-olefin/non-conjugated diene copolymer rubber, and
   the component (B3) being a higher fatty acid amide.
[13] The thermoplastic resin composition according to [12],
   wherein the anti-scratching agent (B) further includes the following component (B1):
   the component (B1) that is ethylene/α-olefin copolymer rubber or an ethylene/α-olefin/non-conjugated diene copolymer rubber.
[14] The molded article according to [12],
   wherein the acrylic resin (A) further includes an impact resistance modifier (a) including 20 mass% or more of a repeating unit derived from an alkyl acrylate having 2 to 8 carbon atoms.
[15] The molded article according to any one of [12] to [14],
   wherein ΔE*ab between before and after a scratch resistance test is 3 or less.
[16] An exterior material for a vehicle including the molded article according to any one of [12] to [15].

### [Advantageous Effects of Invention]

The thermoplastic resin composition of the present invention has an excellent appearance, scratch resistance, weather resistance, and heat resistance in a molded article.

In addition, the molded article of the present invention has an excellent appearance, scratch resistance, weather resistance, and heat resistance.

In addition, the method of manufacturing a molded article of the present invention is excellent in productivity and excellent in appearance, scratch resistance, weather resistance, and heat resistance in the obtained molded article.

In addition, the exterior material for a vehicle of the present invention has an excellent appearance, scratch resistance, weather resistance, and heat resistance.

### [Description of Embodiments]

A thermoplastic resin composition of the present invention includes an acrylic resin (A) and an anti-scratching agent (B).

### (Acrylic resin (A))

The acrylic resin (A) is preferably a resin (A1) including 80 mass% or more of a repeating unit derived from methyl methacrylate or a resin composition (A2) that includes the resin (A1) including 80 mass% or more of a repeating unit derived from methyl methacrylate and an impact resistance modifier (a) including 20 mass% or more of a repeating unit derived from an alkyl acrylate having 2 to 8 carbon atoms, since thereby an excellent appearance, heat resistance, and mechanical properties in a molded article are obtained.

### (Resin (A1))

As the resin (A1) including 80 mass% or more of a repeating unit derived from methyl methacrylate (hereinafter abbreviated as a "resin (A1)" in some cases), for example, a homopolymer of methyl methacrylate, a copolymer of methyl methacrylate and other monomers, and the like may be exemplified. Among the resins (A1), a homopolymer of methyl methacrylate and a copolymer having 80 mass% or more and 100 mass% or less of a repeating unit derived from methyl methacrylate are preferable, a copolymer including 85 mass% or more and 99.5 mass% or less of a repeating unit derived from methyl methacrylate is more preferable, and a homopolymer of methyl methacrylate and a copolymer including 90 mass% or more and 99 mass% or less of a repeating unit derived from methyl methacrylate is most preferable since thereby an excellent appearance, heat resistance, and tensile strength in a molded article are obtained.

As the other monomers, for example, a (meth)acrylate compound other than methyl methacrylate such as methyl acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate, tert-butyl (meth)acrylate, n-hexyl (meth)acrylate, cyclohexyl (meth)acrylate, n-octyl (meth)acrylate, 2-ethylhexyl (meth)acrylate, dodecyl (meth)acrylate, tridecyl (meth)acrylate, stearyl (meth)acrylate, phenyl (meth)acrylate, benzyl (meth)acrylate, phenoxyethyl (meth)acrylate, isobornyl (meth)acrylate, glycidyl (meth)acrylate, tetrahydrofurfuryl (meth)acrylate, norbornyl (meth)acrylate, adamantyl (meth)acrylate, dicyclopentenyl (meth)acrylate, dicyclopentanyl (meth)acrylate, tetracyclododecanyl (meth)acrylate, cyclohexane dimethanol mono(meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 2-methoxyethyl (meth)acrylate, 2-ethoxyethyl (meth)acrylate, 3-methoxybutyl (meth)acrylate, butoxyethyl (meth)acrylate, methoxytriethylene glycol (meth)acrylate, methoxydipropylene glycol (meth)acrylate, 2-(meth)acryloyloxymethyl-2-methylbicycloheptane, 4-(meth)acryloyloxymethyl-2-methyl-2-ethyl-1,3-dioxolane, and 4-(meth)acryloyloxymethyl-2-methyl-2-isobutyl-1,3-dioxolane; (meth)acrylic acid; (meth)acrylonitrile; a (meth)acrylamide compound such as (meth)acrylamide, N-dimethyl (meth)acrylamide, N-diethyl (meth)acrylamide, N-butyl (meth)acrylamide, dimethylaminopropyl (meth)acrylamide, N-methylol (meth)acrylamide, N-methoxymethyl (meth)acrylamide, N-butoxymethyl (meth)acrylamide, hydroxyethyl (meth)acrylamide, and methylene bis(meth)acrylamide; an aromatic vinyl compound such as styrene and α-methylstyrene; a vinyl ether compound such as vinyl methyl ether, vinyl ethyl ether, and 2-hydroxyethyl vinyl ether; a carboxylic acid vinyl compound such as vinyl acetate and vinyl butyrate; and an olefin compound such as ethylene, propylene, butene, and isobutene may be exemplified. One type of such other monomers may be used alone or two or more types thereof may be used in combination. Among such other monomers, a (meth)acrylate compound other than methyl methacrylate is preferable and methyl acrylate, ethyl acrylate, and n-butyl acrylate are more preferable since thereby an excellent appearance and thermal stability in a molded article are obtained.

Here, in this specification, (meth)acrylate refers to either or both of acrylate and methacrylate.

In order to prevent deterioration of performance inherent in the acrylic resin, in all the monomers (100 mass%), a content of other monomers is 20 mass% or less, preferably 0 mass% or more and 20 mass% or less, more preferably 0.5 mass% or more and 15 mass% or less, and most preferably 1 mass% or more and 10 mass% or less.

As a method of manufacturing the resin (A1), for example, a bulk polymerization method, a suspension polymerization method, an emulsion polymerization method, or a solution polymerization method may be exemplified. Among the methods of polymerizing the resin (A1), in consideration of excellent productivity, a bulk polymerization method and a suspension polymerization method are preferable, the bulk polymerization method is more preferable, and a continuous bulk polymerization method is most preferable because it is possible to prevent contamination with foreign matter.

The mass average molecular weight of the resin (A1) is preferably 20,000 or more and 200,000 or less and more preferably 50,000 or more and 150,000 or less. When the mass average molecular weight of the resin (A1) is 20,000 or more, chemical resistance is excellent. In addition, when the mass average molecular weight of the resin (A1) is 200,000 or less, fluidity during melt molding is excellent.

Here, in this specification, the mass average molecular weight is a value that is measured using polystyrene standards as reference samples according to gel permeation chromatography.

### (Impact resistance modifier (a))

The impact resistance modifier (a) (hereinafter abbreviated as an "impact resistance modifier (a)" in some cases) including 20 mass% or more of a repeating unit derived from an alkyl acrylate having 2 to 8 carbon atoms includes 20 mass% or more of a repeating unit derived from an alkyl acrylate having 2 to 8 carbon atoms, preferably includes 20 mass% or more and 80 mass% or less of a repeating unit derived from an alkyl acrylate having 2 to 8 carbon atoms, more preferably includes 25 mass% or more and 70 mass% or less of a repeating unit derived from an alkyl acrylate having 2 to 8 carbon atoms, and most preferably 30 mass% or more and 60 mass% or less thereof.

As the impact resistance modifier (a), for example, known impact resistance modifiers may be exemplified. One type of such impact resistance modifier (a) may be used alone or two or more types thereof may be used in combination. Among such impact resistance modifiers (a), fine particles including an inner layer that is a rubber elastic layer including a repeating unit derived from an alkyl acrylate having 2 to 8 carbon atoms and an outer layer that is a hard layer are preferable since thereby an excellent compatibility with the resin (A1) and excellent impact resistance in a molded article are obtained.

The inner layer is preferably a rubber elastic layer including a repeating unit derived from an alkyl acrylate having 2 to 8 carbon atoms.

A glass transition temperature of a homopolymer of an alkyl acrylate having 2 to 8 carbon atoms used for the rubber elastic layer is preferably -80 °C or higher and 25 °C or lower and more preferably -60 °C or higher and 10 °C or lower. When the glass transition temperature of a homopolymer of an alkyl acrylate having 2 to 8 carbon atoms used for the rubber elastic layer is -80 °C or higher, productivity is excellent. In addition, when the glass transition temperature of a homopolymer of an alkyl acrylate having 2 to 8 carbon atoms used for the rubber elastic layer is 25 °C or lower, impact resistance at a low temperature of the molded article is excellent.

Here, in this specification, the glass transition temperature is a value that is measured according to ISO 3146 and heat flux differential scanning calorimetry measurement.

As compositional proportions of monomers constituting the inner layer, in all the monomers (100 mass%), preferably, there is 40 mass% or more and 88.9 mass% or less of an alkyl acrylate having 2 to 8 carbon atoms, 10 mass% or more and 58.9 mass% or less of a non-crosslinking monomer other than an alkyl acrylate having 2 to 8 carbon atoms, 0 mass% or more and 10 mass% or less of a crosslinking monomer, and 0.1 mass% or more and 10 mass% or less of a graft crossing agent, and more preferably, there is 60 mass% or more and 84.8 mass% or less of an alkyl acrylate having 2 to 8 carbon atoms, 15 mass% or more and 38.8 mass% or less of a non-crosslinking monomer other than an alkyl acrylate having 2 to 8 carbon atoms, 0 mass% or more and 5 mass% or less of a crosslinking monomer, and 0.2 mass% or more and 5 mass% or less of a graft crossing agent since thereby an excellent impact resistance in a molded article is obtained.

As the alkyl acrylate having 2 to 8 carbon atoms, for example, ethyl acrylate, n-propyl acrylate, iso-propyl acrylate, n-butyl acrylate, iso-butyl acrylate, sec-butyl acrylate, tert-butyl acrylate, n-hexyl acrylate, cyclohexyl acrylate, n-octyl acrylate, and 2-ethylhexyl acrylate may be exemplified. Among such alkyl acrylates having 2 to 8 carbon atoms, ethyl acrylate, n-butyl acrylate, n-hexyl acrylate, n-octyl acrylate, and 2-ethylhexyl acrylate are preferable, and n-butyl acrylate is more preferable since thereby an excellent impact resistance in a molded article is obtained.

As the non-crosslinking monomer other than an alkyl acrylate having 2 to 8 carbon atoms, for example, a (meth)acrylate compound other than an alkyl acrylate having 2 to 8 carbon atoms such as methyl (meth)acrylate, ethyl methacrylate, n-propyl methacrylate, iso-propyl methacrylate, n-butyl methacrylate, iso-butyl methacrylate, sec-butyl methacrylate, tert-butyl methacrylate, n-hexyl methacrylate, cyclohexyl methacrylate, n-octyl methacrylate, 2-ethylhexyl methacrylate, dodecyl (meth)acrylate, tridecyl (meth)acrylate, stearyl (meth)acrylate, phenyl (meth)acrylate, benzyl (meth)acrylate, phenoxyethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 2-methoxyethyl (meth)acrylate, 2-ethoxyethyl (meth)acrylate, 3-methoxybutyl (meth)acrylate, butoxyethyl (meth)acrylate, methoxytriethylene glycol (meth)acrylate, methoxydipropylene glycol (meth)acrylate, 2-(meth)acryloyloxymethyl-2-methylbicycloheptane, 4-(meth)acryloyloxymethyl-2-methyl-2-ethyl-1,3-dioxolane, and 4-(meth)acryloyloxymethyl-2-methyl-2-isobutyl-1,3-dioxolane; (meth)acrylic acid; (meth)acrylonitrile; a (meth)acrylamide compound such as (meth)acrylamide, N-dimethyl (meth)acrylamide, N-diethyl (meth)acrylamide, N-butyl (meth)acrylamide, dimethylaminopropyl (meth)acrylamide, N-methylol (meth)acrylamide, N-methoxymethyl (meth)acrylamide, N-butoxymethyl (meth)acrylamide, and hydroxyethyl (meth)acrylamide, and methylene bis(meth)acrylamide; an aromatic vinyl compound such as styrene and α-methylstyrene; a vinyl ether compound such as vinyl methyl ether, vinyl ethyl ether, and 2-hydroxyethyl vinyl ether; a carboxylic acid vinyl compound such as vinyl acetate and vinyl butyrate; and an olefin compound such as ethylene, propylene, butene, and isobutene may be exemplified. One type of such other monomers may be used alone or two or more types thereof may be used in combination. Among such other monomers, a (meth)acrylate compound other than an alkyl acrylate having 2 to 8 carbon atoms and an aromatic vinyl compound is preferable, and methyl methacrylate and styrene are more preferable since thereby an excellent appearance in a molded article is obtained.

The crosslinking monomer is a monomer having a plurality of polymerizable double bonds having the same reactivity. For example, 1,3-butylene di(meth)acrylate, and 1,4-butanediol di(meth)acrylate may be exemplified. One type of such crosslinking monomers may be used alone or two or more types thereof may be used in combination. Among such crosslinking monomers, 1,3-butylene di(meth)acrylate, and 1,4-butanediol di(meth)acrylate are preferable, and 1,3-butylene di(meth)acrylate is more preferable since thereby excellent copolymerizability with the alkyl acrylate having 2 to 8 carbon atoms is obtained.

The graft crossing agent is a monomer having a plurality of polymerizable double bonds having different reactivity. For example, allyl (meth)acrylate may be exemplified. One type of such graft crossing agents may be used alone or two or more types thereof may be used in combination. Among such graft crossing agents, allyl (meth)acrylate is preferable, and allyl methacrylate is more preferable since thereby excellent copolymerizability with the alkyl acrylate having 2 to 8 carbon atoms is obtained.

The inner layer may be a single layer or multiple layers. However, one layer to three layers are preferable and one or two layers are more preferable due to excellent productivity.

The outer layer is preferably a hard layer.

A glass transition temperature of the hard layer is preferably 50 °C or higher and 200 °C or lower, and more preferably 60 °C or higher and 150 °C. When the glass transition temperature of the hard layer is 50 °C or higher, the appearance of the molded article is excellent. In addition, when the glass transition temperature of the hard layer is 200 °C or lower, the impact resistance of the molded article is excellent.

As compositional proportions of monomers constituting the outer layer, in all the monomers (100 mass%), preferably, there is 50 mass% or more and 100 mass% or less of an alkyl (meth)acrylate having 1 to 4 carbon atoms, and 0 mass% or more and 50 mass% or less of a monomer other than an alkyl (meth)acrylate having 1 to 4 carbon atoms, and more preferably, there is 70 mass% or more and 100 mass% or less of an alkyl (meth)acrylate having 1 to 4 carbon atoms, and 0 mass% or more and 30 mass% or less of a monomer other than an alkyl (meth)acrylate having 1 to 4 carbon atoms since thereby an excellent appearance in a molded article is obtained.

As the alkyl (meth)acrylate having 1 to 4 carbon atoms, for example, methyl (meth)acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate, and tert-butyl (meth)acrylate may be exemplified. Among such alkyl (meth)acrylates having 1 to 4 carbon atoms, methyl (meth)acrylate, ethyl (meth)acrylate, and n-butyl (meth)acrylate are preferable, and methyl (meth)acrylate is more preferable since thereby an excellent appearance in a molded article is obtained.

As the monomer other than an alkyl (meth)acrylate having 1 to 4 carbon atoms, for example, a (meth)acrylate compound other than an alkyl (meth)acrylate having 1 to 4 carbon atoms such as n-hexyl (meth)acrylate, cyclohexyl (meth)acrylate, n-octyl (meth)acrylate, 2-ethylhexyl (meth)acrylate, dodecyl (meth)acrylate, tridecyl (meth)acrylate, stearyl (meth)acrylate, phenyl (meth)acrylate, benzyl (meth)acrylate, phenoxyethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 2-methoxyethyl (meth)acrylate, 2-ethoxyethyl (meth)acrylate, 3-methoxybutyl (meth)acrylate, butoxyethyl (meth)acrylate, methoxytriethylene glycol (meth)acrylate, methoxydipropylene glycol (meth)acrylate, 2-(meth)acryloyloxymethyl-2-methylbicycloheptane, 4-(meth)acryloyloxymethyl-2-methyl-2-ethyl-1,3-dioxolane, and 4-(meth)acryloyloxymethyl-2-methyl-2-isobutyl-1,3-dioxolane; (meth)acrylic acid; (meth)acrylonitrile; a (meth)acrylamide compound such as (meth)acrylamide, N-dimethyl (meth)acrylamide, N-diethyl (meth)acrylamide, N-butyl (meth)acrylamide, dimethylaminopropyl (meth)acrylamide, N-methylol (meth)acrylamide, N-methoxymethyl (meth)acrylamide, N-butoxymethyl (meth)acrylamide, hydroxyethyl (meth)acrylamide, and methylene bis(meth)acrylamide; an aromatic vinyl compound such as styrene and α-methylstyrene; a vinyl ether compound such as vinyl methyl ether, vinyl ethyl ether, and 2-hydroxyethyl vinyl ether; a carboxylic acid vinyl compound such as vinyl acetate and vinyl butyrate; and an olefin compound such as ethylene, propylene, butene, and isobutene may be exemplified. One type of such other monomers may be used alone or two or more types thereof may be used in combination. Among such other monomers, a (meth)acrylate compound other than an alkyl (meth)acrylate having 1 to 4 carbon atoms is preferable, and an alkyl (meth)acrylate compound other than an alkyl (meth)acrylate having 1 to 4 carbon atoms is more preferable since thereby excellent copolymerizability with the alkyl (meth)acrylate having 1 to 4 carbon atoms is obtained.

The outer layer may be a single layer or multiple layers. However, one layer to three layers are preferable and one or two layers are more preferable due to excellent productivity.

As a mass ratio between the inner layer and the outer layer, in the total mass (100 mass%) of the inner layer and the outer layer, preferably, there is 20 mass% or more and 80 mass% or less of the inner layer and 20 mass% or more and 80 mass% or less of the outer layer. More preferably, there is 50 mass% or more and 70 mass% or less of the inner layer and 30 mass% or more and 50 mass% or less of the outer layer. When there is 20 mass% or more of the inner layer and 80 mass% or less of the outer layer, the impact resistance of the molded article is excellent. In addition, when there is 80 mass% or less of the inner layer and 20 mass% or more of the outer layer, compatibility with a resin including 80 mass% or more of a repeating unit derived from methyl methacrylate is excellent.

As a method of manufacturing fine particles including an inner layer that is a rubber elastic layer and an outer layer that is a hard layer, for example, a suspension polymerization method, and an emulsion polymerization method, may be exemplified. Among methods of manufacturing fine particles including an inner layer that is a rubber elastic layer including a repeating unit derived from an alkyl acrylate having 2 to 8 carbon atoms and an outer layer that is a hard layer, an emulsion polymerization method is preferable due to excellent productivity.

As a method of adding a monomer and the like in emulsion polymerization, for example, a batch addition method, a divided addition method, and a continuous addition method, may be exemplified. One type of such addition methods may be used alone or two or more types thereof may be used in combination. Among such addition methods, a divided addition method is preferable since then an impact resistance modifier (a) with excellent qualities is obtained.

The mass average particle size of the fine particles including an inner layer that is a rubber elastic layer and an outer layer that is a hard layer is preferably 10 nm or more and 1000 nm or less and more preferably 50 nm or more and 500 nm or less. When the mass average particle size of the fine particles including an inner layer that is a rubber elastic layer including a repeating unit derived from an alkyl acrylate having 2 to 8 carbon atoms and an outer layer that is a hard layer is 10 nm or more, the impact resistance of the molded article is excellent. In addition, when the mass average particle size of the fine particles including an inner layer that is a rubber elastic layer including a repeating unit derived from an alkyl acrylate having 2 to 8 carbon atoms and an outer layer that is a hard layer is 1000 nm or less, the chemical resistance of the molded article is excellent.

Here, in this specification, the mass average particle size is a value that is measured by capillary hydrodynamic flow fractionation.

As a method of powderizing fine particles including an inner layer that is a rubber elastic layer and an outer layer that is a hard layer obtained in emulsion polymerization, for example, a solidification method and a spray drying method, may be exemplified. Among such powderizing methods, a solidification method is preferable since then an impact resistance modifier (a) with excellent qualities are obtained.

### (Resin composition (A2))

The resin composition (A2) includes the resin (A1) and the impact resistance modifier (a).

As compositional proportions of the resin (A1) and the impact resistance modifier (a) in the resin composition (A2), in the resin composition (A2) (100 mass%), preferably, there is 20 mass% or more and 99 mass% or less of the resin (A1) and 1 mass% or more and 80 mass% or less of the impact resistance modifier (a), and more preferably, there is 55 mass% or more and 80 mass% or less of the resin (A1) and 20 mass% or more and 45 mass% or less of the impact resistance modifier (a). When there is 20 mass% or more of the resin (A1) and 80 mass% or less of the impact resistance modifier (a), performance inherent in the acrylic resin does not deteriorate. In addition, when there is 99 mass% or less of the resin (A1) and 1 mass% or more of the impact resistance modifier (a), the impact resistance of the molded article is excellent.

### (Anti-scratching agent (B))

Preferably, the anti-scratching agent (B) includes the following component (B2) and component (B3) in order to obtain excellent scratch resistance in a molded article and additionally includes the following component (B1) and component (B4) in order to obtain better scratch resistance of the molded article.
Component (B1): An ethylene/α-olefin copolymer rubber or ethylene/α-olefin/non-conjugated diene copolymer rubber
Component (B2): A copolymer of ethylene and at least one vinyl monomer which is a copolymer other than an ethylene/α-olefin copolymer rubber and an ethylene/α-olefin/non-conjugated diene copolymer rubber
Component (B3): Higher fatty acid amide
Component (B4): Graft copolymer

### (Component (B1))

The component (B1) is ethylene/α-olefin copolymer rubber or ethylene/α-olefin/non-conjugated diene copolymer rubber.

As the α-olefin, for example, propylene, 1-butene, 1-pentene, 1-hexene, 1-octene, 1-decene, 2-methyl-1-propene, 3-methyl-1-pentene, 4-methyl-1-pentene, and 5-methyl-1-hexene may be exemplified. One type of such α-olefins may be used or two or more types thereof may be used in combination. Among such α-olefins, propylene, 1-butene, and 1-octene are preferable, and propylene and 1-octene are more preferable since thereby excellent affinity with the component (B3) and excellent scratch resistance in a molded article are obtained.

As the non-conjugated diene, for example, dicyclopentadiene, 1,4-hexadiene, cyclooctadiene, methylene norbornene, ethylidene norbornene, and vinyl norbornene may be exemplified. One type of such non-conjugated dienes may be used or two or more types thereof may be used in combination. Among such non-conjugated dienes, dicyclopentadiene, and ethylidene norbornene are preferable, and ethylidene norbornene is more preferable since thereby excellent affinity with the component (B3) and excellent scratch resistance in a molded article are obtained.

As the ethylene/α-olefin copolymer rubber, for example, ethylene/propylene copolymer rubber, ethylene/1-butene copolymer rubber, ethylene/1-hexene copolymer rubber, and ethylene/1-octene copolymer rubber may be exemplified. One type of such ethylene/α-olefin copolymer rubbers may be used alone or two or more types thereof may be used in combination. Among such ethylene/α-olefin copolymer rubbers, ethylene/propylene copolymer rubber, ethylene/1-butene copolymer rubber, and ethylene/1-octene copolymer rubber are preferable, and ethylene/propylene copolymer rubber, and ethylene/1-octene copolymer rubber are more preferable since thereby excellent affinity with the component (B3) and excellent scratch resistance in a molded article are obtained.

As the ethylene/α-olefin/non-conjugated diene copolymer rubber, for example, ethylene/1-butene/non-conjugated diene copolymer rubber; and ethylene/propylene/non-conjugated diene copolymer rubber such as ethylene/propylene/ethylidene norbornene copolymer rubber, and ethylene/propylene/dicyclopentadiene copolymer rubber may be exemplified. One type of such ethylene/α-olefin/non-conjugated diene copolymer rubbers may be used alone or two or more types thereof may be used in combination. Among such ethylene/α-olefin/non-conjugated diene copolymer rubbers, ethylene/propylene/ethylidene norbornene copolymer rubber and ethylene/propylene/dicyclopentadiene copolymer rubber are preferable, and ethylene/propylene/ethylidene norbornene copolymer rubber is more preferable since thereby excellent affinity with the component (B3) and excellent scratch resistance in a molded article are obtained.

In the component (B1) (100 mass%), a content of a repeating unit derived from ethylene in the component (B1) is preferably 25 mass% or more and 85 mass% or less and more preferably 30 mass% or more and 80 mass% or less. When a content of the repeating unit derived from ethylene is 25 mass% or more, affinity with the component (B3) is excellent. In addition, when a content of the repeating unit derived from ethylene is 85 mass% or less, the scratch resistance of the molded article is excellent.

### (Component (B2))

The component (B2) is a copolymer of ethylene and at least one vinyl monomer which is a copolymer other than an ethylene/α-olefin copolymer rubber and an ethylene/α-olefin/non-conjugated diene copolymer rubber.

As the vinyl monomer, for example, a (meth)acrylate compound such as methyl (meth)acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate, tert-butyl (meth)acrylate, n-hexyl (meth)acrylate, cyclohexyl (meth)acrylate, n-octyl (meth)acrylate, 2-ethylhexyl (meth)acrylate, dodecyl (meth)acrylate, and glycidyl (meth)acrylate; (meth)acrylic acid; maleic acid; and a carboxylic acid vinyl compound such as vinyl acetate and vinyl butyrate may be exemplified. One type of such vinyl monomers may be used alone or two or more types thereof may be used in combination. Among such vinyl monomers, methyl (meth)acrylate ethyl (meth)acrylate, n-butyl (meth)acrylate, and vinyl acetate are preferable, and methyl (meth)acrylate, and ethyl (meth)acrylate are more preferable because it is possible to change polarity and excellent anti-affinity with the component (B3) is obtained.

A melting point of the component (B2) is preferably 70 °C or higher and 130 °C or lower and more preferably 80 °C or higher and 110 °C or lower. When the melting point of the component (B2) is 70 °C or higher, the heat resistance of the molded article is excellent. In addition, when the melting point of the component (B2) is 130 °C or lower, it is easy to knead the acrylic resin (A) and the anti-scratching agent (B).

Here, in this specification, the melting point is a peak temperature of a main melting peak of a melting curve observed in a curve during heating obtained using a differential scanning calorimeter according to differential scanning calorimetry measurement.

The component (B1) and the component (B2) may be modified due to an acid or the like.

### (Component (B3))

The component (B3) is a higher fatty acid amide.

As the higher fatty acid amide, for example, a saturated fatty acid amide, an unsaturated fatty acid amide, and a bis fatty acid amide may be exemplified. One type of such higher fatty acid amides may be used alone or two or more types thereof may be used in combination.

The higher fatty acid amide preferably has 10 to 25 carbon atoms, and more preferably has 12 to 22 carbon atoms. When the higher fatty acid amide has 10 carbon atoms or more, compatibility with the component (B1) is excellent, and scratch resistance of the molded article is excellent. In addition, when the higher fatty acid amide has 25 carbon atoms or less, manufacture becomes easier.

As the saturated fatty acid amide, for example, lauric acid amide, palmitic acid amide, stearic acid amide, and behenic acid amide may be exemplified.

As the unsaturated fatty acid amide, for example, erucic acid amide, oleic acid amide, brassidic acid amide, and elaidic acid amide may be exemplified.

As the bis fatty acid amide, for example, bis fatty acid amides such as methylene bisstearic acid amide, methylene bisoleic acid amide, ethylene bisstearic acid amide, and ethylene bisoleic acid amide; stearyl erucic acid amide, and oleyl palmitic acid amide may be exemplified.

One type of such saturated fatty acid amides, unsaturated fatty acid amides, and bis fatty acid amides may be used alone or two or more types thereof may be used in combination. Among such saturated fatty acid amides, unsaturated fatty acid amides, and bis fatty acid amides, stearic acid amide, behenic acid amide, erucic acid amide, oleic acid amide, and ethylene bisoleic acid amide are preferable, and erucic acid amide, oleic acid amide, and ethylene bisoleic acid amide are more preferable since thereby excellent scratch resistance in a molded article is obtained.

A melting point of the higher fatty acid amide is preferably 40 °C or higher and 110 °C or lower and more preferably 60 °C or higher and 95 °C or lower. When the melting point of the higher fatty acid amide is 40 °C or higher, the heat resistance of the molded article is excellent. In addition, when the melting point of the higher fatty acid amide is 110 °C or lower, dispersibility into the molded article is excellent.

### (Component (B4))

The component (B4) is a graft copolymer.

The graft copolymer is preferably a graft copolymer having a main chain (B4-1) and a side chain (B4-2).

The main chain (B4-1) is preferably a segment having excellent compatibility with the component (B2) and is preferably a copolymer of ethylene and at least one vinyl monomer.

As the vinyl monomer, for example, a (meth)acrylate compound such as methyl (meth)acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate, tert-butyl (meth)acrylate, n-hexyl (meth)acrylate, cyclohexyl (meth)acrylate, n-octyl (meth)acrylate, 2-ethylhexyl (meth)acrylate, dodecyl (meth)acrylate, and glycidyl (meth)acrylate; (meth)acrylic acid; maleic acid; and a carboxylic acid vinyl compound such as vinyl acetate and vinyl butyrate may be exemplified. One type of such vinyl monomers may be used alone and two or more types thereof may be used in combination. Among such vinyl monomers, methyl (meth)acrylate, ethyl (meth)acrylate, n-butyl (meth)acrylate, and vinyl acetate are preferable, and methyl (meth)acrylate and ethyl (meth)acrylate are more preferable since thereby excellent compatibility with the component (B2) is obtained.

The side chain (B4-2) is preferably a segment having excellent compatibility with both the component (B1) and the component (B2).

As monomers constituting the segment of the side chain (B4-2), for example, an alkyl (meth)acrylate compound such as methyl (meth)acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate, tert-butyl (meth)acrylate, n-hexyl (meth)acrylate, cyclohexyl (meth)acrylate, n-octyl (meth)acrylate, 2-ethylhexyl (meth)acrylate, and dodecyl (meth)acrylate; a hydroxyl group-containing compound such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; a carboxyl group-containing compound such as (meth)acrylic acid, maleic acid; (meth)acrylonitrile; a (meth)acrylamide compound such as (meth)acrylamide, N-dimethyl (meth)acrylamide, N-diethyl (meth)acrylamide, N-butyl (meth)acrylamide, dimethylaminopropyl (meth)acrylamide, N-methylol (meth)acrylamide, N-methoxymethyl (meth)acrylamide, N-butoxymethyl (meth)acrylamide, hydroxyethyl (meth)acrylamide, and methylenebis(meth)acrylamide; an aromatic vinyl compound such as styrene and α-methylstyrene; and an olefin compound such as ethylene, propylene, butene, and isobutene may be exemplified. One type of such monomers may be used alone or two or more types thereof may be used in combination. Among such monomers, preferably, an alkyl (meth)acrylate compound, a hydroxyl group-containing compound, and an aromatic vinyl compound are used in combination, and more preferably, butyl (meth)acrylate, a hydroxyalkyl (meth)acrylate, and styrene are used in combination since thereby excellent compatibility with both the component (B1) and the component (B2) is obtained.

In the side chain (B4-2), when a segment is constituted by monomers with different polarities such as an alkyl (meth)acrylate compound, a hydroxyl group-containing compound, and an aromatic vinyl compound, compatibility with both the component (B1) and the component (B2) is excellent.

As compositional proportions of the main chain (B4-1) and the side chain (B4-2) in the graft copolymer (B4), in the graft copolymer (B4) (100 mass%), preferably, there is 40 mass% or more and 90 mass% or less of the main chain (B4-1) and 10 mass% or more and 60 mass% or less of the side chain (B4-2), and more preferably, there is 50 mass% or more and 80 mass% or less of the main chain (B4-1) and 20 mass% or more and 50 mass% or less of the side chain (B4-2) since thereby excellent compatibility with the component (B1) and the component (B2) and excellent scratch resistance in a molded article are obtained.

As a method of manufacturing the graft copolymer (B4), known grafting methods may be used. For example, a method of polymerizing monomers for constituting the side chain (B4-2) in the presence of the main chain (B4-1) may be exemplified.

### (Composition of anti-scratching agent (B))

As compositional proportions of the component (B1), the component (B2), the component (B3), and the component (B4) in the anti-scratching agent (B), in the anti-scratching agent (B) (100 mass%), preferably, there is 10 mass% or more and 40 mass% or less of the component (B1), 35 mass% or more and 70 mass% or less of the component (B2), 10 mass% or more and 30 mass% or less of the component (B3), and 5 mass% or more and 40 mass% or less of the component (B4), and more preferably, there is 15 mass% or more and 35 mass% or less of the component (B1), 40 mass% or more and 60 mass% or less of the component (B2), 15 mass% or more and 25 mass% or less of the component (B3), and 10 mass% or more and 30 mass% or less of the component (B4) since thereby excellent scratch resistance in a molded article is obtained.

### (Thermoplastic resin composition)

A content of the anti-scratching agent (B) in the thermoplastic resin composition is preferably 2 parts by mass or more and 20 parts by mass or less and more preferably 3 parts by mass or more and 12 parts by mass or less with respect to 100 parts by mass of the acrylic resin (A). When the content of the anti-scratching agent (B) is 2 parts by mass or more, the scratch resistance of the molded article is excellent. In addition, when the content of the anti-scratching agent (B) is 20 parts by mass or less, heat resistance and surface hardness of the molded article are excellent.

The thermoplastic resin composition of the present invention may include other additives in addition to the acrylic resin (A) and the anti-scratching agent (B).

Examples of such other additives include, for example, a UV absorber, an antioxidant, an antistatic agent, a flame retardant, and a coloring agent such as a pigment. One type of such other additives may be used alone or two or more types thereof may be used in combination.

In order to prevent deterioration of performance inherent in the acrylic resin, in the acrylic resin (100 parts by mass), a content of other additives in the thermoplastic resin composition is preferably 20 parts by mass or less, more preferably 0 parts by mass or more and 20 parts by mass or less, and most preferably, 0.01 parts by mass or more and 10 parts by mass or less.

### (Molded article)

The molded article of the present invention is obtained by molding the thermoplastic resin composition of the present invention.

As a molding method for obtaining a molded article, for example, injection molding, extrusion molding, and pressure molding may be exemplified. In addition, the obtained molded article may be additionally subjected to secondary molding such as pressure molding and vacuum molding.

Molding conditions such as a molding temperature and a molding pressure may be appropriately set.

ΔE*ab between before and after a scratch resistance test of the molded article is preferably less than 4 and more preferably 0 or more and less than 4, more preferably 0 or more and 3 or less, and most preferably 0 or more and less than 2 since thereby excellent scratch resistance in a molded article is obtained.

Here, in this specification, ΔE*ab between before and after the scratch resistance test of the molded article is a value that is measured using a colorimeter under conditions of an incident light flux with a diameter of 15 mm.

In addition, in this specification, the scratch resistance test is a test that is performed using a Gakushin type friction tester and a gauze as a friction element under conditions of 200 reciprocation times over a distance of 100 mm with a load of 500 g.

ΔE*ab between before and after a weather resistance test of the molded article is preferably less than 5, more preferably 0 or more and less than 5, still more preferably 0 or more and 4 or less, and most preferably 0 or more and less than 3, since thereby excellent weather resistance in a molded article is obtained.

Here, in this specification, ΔE*ab between before and after the weather resistance test of the molded article is a value that is measured using a colorimeter under conditions of an incident light flux with a diameter of 15 mm.

In addition, in this specification, the weather resistance test is performed using a sunshine weather meter at a temperature of 63 °C with a test time of 2000 hours under rainfall conditions in which pure water spraying (over 12 minutes) is repeated every 102 minutes.

Since the molded article of the present invention has an excellent appearance, scratch resistance, weather resistance and heat resistance, for example, it is used for materials for household equipment such as bathroom washbasins, bathtubs, and flush toilets; building materials; and interior and exterior materials for vehicle, and is particularly suitable for an exterior material for a vehicle.

As an exterior material for a vehicle, for example, a meter cover, a door mirror housing, a pillar cover (sash cover), a license plate trim, a front grille, a foglight trim, and an emblem may be exemplified.

### [Examples]

The present invention will be described below in detail with reference to examples, but the present invention is not limited to such examples.

### (Appearance evaluation)

In molded articles (width 140 mm, length 140 mm, thickness 3 mm) obtained in examples and comparative examples, it was visually checked whether silver streak defects (marks such as a liquid flow called a silver streak) due to the anti-scratching agent occurred on the surface of the molded article, and the results were evaluated as follows.
A: No silver streak defects were found
C: Silver streak defects were found

### (Scratch resistance test)

The molded articles (width 140 mm, length 140 mm, thickness 3 mm) obtained in examples and comparative examples were placed on a flat table, and the scratch resistance test was performed using a Gakushin type friction tester (friction tester for color fastness, model name "RT-200," commercially available from Daiei Kagaku Seiki Mfg. Co., Ltd) using five sheets of Kenekura gauze (trade name, commercially available from Care Life Medical Supplies) that were superimposed as friction elements under conditions of 200 reciprocation times over a distance of 100 mm with a load of 500 g. A light beam was emitted to the molded articles between before and after the scratch resistance test along the line of reciprocation or in a direction parallel to the reciprocation direction, and ΔE*ab (a color difference in the L*a*b* color system) and ΔG60 (60° gloss value) were measured.

ΔE*ab was measured using a colorimeter (model name "Color computer SM-T," commercially available from Suga Test Instruments Co., Ltd.) under conditions of an incident light flux with a diameter of 15 mm. The results were evaluated as follows.
A: Less than 2
B: 2 or more and less than 4
C: 4 or more

ΔG60 was measured using a glossmeter (model name "True Gloss GM-26PRO," commercially available from Murakami Color Research Laboratory Co., Ltd). The results were evaluated as follows.
A: Less than 2
B: 2 or more and less than 4
C: 4 or more

### (Weather resistance test)

The weather resistance test was performed on molded articles (width 140 mm, length 140 mm, thickness 3 mm) obtained in examples and comparative examples using a sunshine weather meter (model name "WEL-SUN-HCH," commercially available from Suga Test Instruments Co., Ltd.) at a back panel temperature of 63 °C with a test time of 2000 hours under rainfall conditions in which pure water spraying (over 12 minutes) was repeated every 102 minutes. ΔE*ab (color difference in the L*a*b* color system) was measured using the molded articles between before and after the weather resistance test.

ΔE*ab was measured using a colorimeter (model name "Color computer SM-T," commercially available from Suga Test Instruments Co., Ltd.) under conditions of an incident light flux with a diameter of 15 mm. The results were evaluated as follows.
A: Less than 3
B: 3 or more and less than 5
C: 5 or more

### (Heat resistance test)

Vicat softening temperatures (°C) of the molded articles obtained in examples and comparative examples were measured according to ISO 306 under conditions of a load of 50 N and a heating rate of 50 °C/hour. The results were evaluated as follows.
A: 100 °C or higher
B: 90 °C or higher and less than 100 °C
C: Less than 90 °C

### (Materials)

Acrylic resin (A-1): Acrypet VH PTN0020 (trade name, commercially available from Mitsubishi Rayon, acrylic resin including about 98 mass% of a repeating unit derived from methyl methacrylate)

Acrylic resin (A-2): Acrypet IR K304 PTN0020 (trade name, commercially available from Mitsubishi Rayon, a mixture of a resin including about 98 mass% of a repeating unit derived from methyl methacrylate and an impact resistance modifier including about 40 mass% of a butyl acrylate unit)

Anti-scratching agent (B-1): Nofalloy KA832 (trade name, commercially available from Nof corporation, the component (B1) ethylene/1-octene copolymer rubber, the component (B2) ethylene/ethyl acrylate copolymer, the component (B3) erucic acid amide, the component (B4) a graft copolymer with a main chain of ethylene/ethyl acrylate copolymer and a side chain of n-butyl acrylate/2-hydroxypropyl acrylate/styrene copolymer, the component (B1):the component (B2):the component (B3):the component (B4) = about 20:about 40:about 20:about 20 (mass ratio))

Anti-scratching agent (B'-1): SH-200 (trade name, commercially available from Dow Corning Toray, silicone oil)

100 parts by mass of the acrylic resin (A-1) and 5 parts by mass of the anti-scratching agent (B-1) were supplied to a twin-screw extruder (model name "PCM45," commercially available from Ikegai Corporation) and kneaded at 250 °C to obtain pellets.

The obtained pellets were supplied into an injection molding machine (model name "FAS-T100D," commercially available from Fanuc Corporation), a molding temperature was set to 250 °C, and various molded articles were obtained.

The evaluation results of the obtained molded articles are shown in Table 1.

### [Examples 2 to 4 and Comparative Examples 1 to 4]

Various molded articles were obtained in the same manner as in Example 1 except that formulations shown in Table 1 were used.

The evaluation results of the obtained molded articles are shown in Table 1.

**[Table 1]**

| | Acrylic resin (A) | | Anti-scratching agent(B) | | Appearance | Scratch resistance | | | | Weather resistance | | Heat resistance | |
|---|---|---|---|---|---|---|---|---|---|---|---|---|---|
| | Type | Content (parts by mass) | Type | Content (parts by mass) | Evaluation | ΔE*ab | Evaluation | ΔG60 | Evaluation | ΔE*ab | Evaluation | (°C) | Evaluation |
| Example 1 | (A-1) | 100 | (B-1) | 5 | A | 0.9 | A | 1.0 | A | 2.3 | A | 101 | A |
| Example 2 | (A-1) | 100 | (B-1) | 10 | A | 0.9 | A | 0.9 | A | 2.9 | A | 97 | B |
| Example 3 | (A-1) | 100 | (B-1) | 15 | A | 1.2 | A | 1.0 | A | 4.0 | B | 95 | B |
| Example 4 | (A-2) | 100 | (B-1) | 5 | A | 2.5 | B | 3.7 | B | 2.9 | A | 93 | B |
| Comparative Example 1 | (A-1) | 100 | - | - | A | 4.0 | C | 4.0 | C | 2.0 | A | 107 | A |
| Comparative Example 2 | (A-1) | 100 | (B'-1) | 0.5 | C | 2.4 | B | 1.4 | A | 5.0 | C | 109 | A |
| Comparative Example 3 | (A-1) | 100 | (B'-1) | 1 | C | 0.9 | A | 0.4 | A | 6.1 | C | 106 | A |
| Comparative Example 4 | (A-2) | 100 | - | - | A | 5.8 | C | 4.9 | C | 2.7 | A | 98 | B |

The molded articles obtained in Examples 1 to 4 had an excellent appearance and scratch resistance while weather resistance and heat resistance were maintained.

On the other hand, the scratch resistance of the molded article obtained in Comparative Example 1 was inferior to those of the examples (in particular, Examples 1 to 3). In addition, the molded articles obtained in Comparative Examples 2 to 3 had poor appearance and weather resistance because silicone oil was used as the anti-scratching agent. In addition, the scratch resistance of the molded article obtained in Comparative Example 4 was inferior to those of the examples (in particular, Example 4).

### [Industrial Applicability]

Since the molded article of the present invention has an excellent appearance, scratch resistance, weather resistance and heat resistance, for example, it is used for materials for household equipment such as bathroom washbasins, bathtubs, and flush toilets; building materials; and interior and exterior materials for vehicle, and is particularly suitable for an exterior material for a vehicle.

## Claims

1. A thermoplastic resin composition including an acrylic resin (A) and an anti-scratching agent (B),
wherein the acrylic resin (A) includes a resin (A1) including 80 mass% or more of a repeating unit derived from methyl methacrylate, and
wherein the anti-scratching agent (B) includes the following component (B2) and component (B3):
the component (B2) being a copolymer of ethylene and at least one vinyl monomer which is a copolymer other than an ethylene/α-olefin copolymer rubber and an ethylene/α-olefin/non-conjugated diene copolymer rubber, and
the component (B3) being a higher fatty acid amide.

2. The thermoplastic resin composition according to claim 1,
wherein the anti-scratching agent (B) further includes the following component (B1):
the component (B1) that is ethylene/α-olefin copolymer rubber or an ethylene/α-olefin/non-conjugated diene copolymer rubber.

3. The thermoplastic resin composition according to claim 1,
wherein the anti-scratching agent (B) further includes the following component (B4):
the component (B4) that is a graft copolymer.

4. The thermoplastic resin composition according to any one of claims 1 to 3,
wherein a content of the anti-scratching agent (B) is 2 parts by mass or more and 20 parts by mass or less with respect to 100 parts by mass of the acrylic resin (A).

5. The thermoplastic resin composition according to any one of claims 1 to 4,
wherein the resin (A1) including 80 mass% or more of a repeating unit derived from methyl methacrylate includes a repeating unit derived from methyl methacrylate and a repeating unit derived from methyl acrylate.

6. The thermoplastic resin composition according to any one of claims 1 to 5,
wherein a mass average molecular weight of the resin (A1) including 80 mass% or more of a repeating unit derived from methyl methacrylate is 20,000 or more and 200,000 or less.

7. The thermoplastic resin composition according to any one of claims 1 to 6,
wherein the acrylic resin (A) further includes an impact resistance modifier (a) including 20 mass% or more of a repeating unit derived from an alkyl acrylate having 2 to 8 carbon atoms.

8. A molded article including the thermoplastic resin composition according to any one of claims 1 to 7.

9. The molded article according to claim 8,
wherein ΔE*ab between before and after a scratch resistance test is 3 or less.

10. An exterior material for a vehicle including the thermoplastic resin composition according to any one of claims 1 to 9.

11. An exterior material for a vehicle including the molded article according to claim 8 or 9.

12. A molded article including an acrylic resin (A) and an anti-scratching agent (B),
wherein ΔE*ab between before and after a weather resistance test is less than 3,
wherein the acrylic resin (A) includes a resin (A1) including 80 mass% or more of a repeating unit derived from methyl methacrylate, and
wherein the anti-scratching agent (B) includes the following component (B2) and component (B3):
the component (B2) being a copolymer of ethylene and at least one vinyl monomer which is a copolymer other than an ethylene/α-olefin copolymer rubber and an ethylene/α-olefin/non-conjugated diene copolymer rubber, and
the component (B3) being a higher fatty acid amide.

13. The thermoplastic resin composition according to claim 12,
wherein the anti-scratching agent (B) further includes the following component (B1):
the component (B1) that is ethylene/α-olefin copolymer rubber or an ethylene/α-olefin/non-conjugated diene copolymer rubber.

14. The molded article according to claim 12,
wherein the acrylic resin (A) further includes an impact resistance modifier (a) including 20 mass% or more of a repeating unit derived from an alkyl acrylate having 2 to 8 carbon atoms.

15. The molded article according to any one of claims 12 to 14,
wherein ΔE*ab between before and after a scratch resistance test is 3 or less.

16. An exterior material for a vehicle including the molded article according to any one of claims 12 to 15.
